(19) Europäisches Patentamt
European Patent Office
Office européen des brevets

(11) **EP 2 515 446 B1**

(12) **FASCICULE DE BREVET EUROPEEN**

(45) Date de publication et mention
de la délivrance du brevet:
**04.06.2014 Bulletin 2014/23**

(51) Int Cl.:
***H04B 5/00*** *(2006.01)*

(21) Numéro de dépôt: **12163189.9**

(22) Date de dépôt: **04.04.2012**

(54) **Récepteur alimenté par une interface sans fil de type inductif**

Empfänger mit drahtloser induktiver Versorgung

Receiver with wireless inductive supply

(84) Etats contractants désignés:
**AL AT BE BG CH CY CZ DE DK EE ES FI FR GB
GR HR HU IE IS IT LI LT LU LV MC MK MT NL NO
PL PT RO RS SE SI SK SM TR**

(30) Priorité: **18.04.2011 FR 1153354**

(43) Date de publication de la demande:
**24.10.2012 Bulletin 2012/43**

(73) Titulaire: **Commissariat à l'Énergie Atomique
et aux Énergies Alternatives
75015 Paris (FR)**

(72) Inventeur: **Tetu, M. Yann
38000 Grenoble (FR)**

(74) Mandataire: **Guérin, Jean-Philippe et al
Opilex
310 avenue Berthelot
69008 Lyon (FR)**

(56) Documents cités:
**EP-A1- 0 249 356      EP-A2- 0 541 323
DE-A1- 19 717 505      US-A1- 2010 283 698**

**Description**

L'invention concerne la transmission d'énergie sans fil (typiquement la transmission d'énergie par une interface sans contact), et en particulier l'alimentation d'un récepteur de type RFID inductif.

Un nombre croissant d'applications font appel à des transmissions sans fil. Des systèmes de communication de type RFID inductif ont notamment été développés et connaissent un essor important. Un tel système comprend une station de base ou lecteur, et un objet autonome comportant un numéro d'identification et fonctionnant en récepteur alimenté à distance. Le récepteur est généralement dénommé étiquette lorsqu'il est accolé à un produit, ou dénommé carte sans contact lorsqu'il est destiné pour de l'identification de personnes.

Par ailleurs, des systèmes de téléalimentation de type RFID inductif sont également développés, par exemple pour recharger des batteries d'un implant sous-cutané ou d'un appareil électronique.

Dans de tels systèmes, on établit un lien par champ magnétique radiofréquence entre le lecteur et un ou plusieurs récepteurs. Ce champ magnétique est en régime quasi-stationnaire. Les organes de couplage du lecteur et du récepteur sont des circuits conducteurs incluant des boucles, enroulements ou bobines formant un circuit d'antenne. Des composants électroniques sont associés au circuit d'antenne avec pour fonction de réaliser un accord en fréquence, un amortissement ou une adaptation d'impédance. L'association du circuit d'antenne et des composants électroniques est usuellement désignée par le terme d'antenne. L'antenne du lecteur est assimilable à un circuit résonnant RLC série ou parallèle connecté à un générateur. L'antenne du récepteur est assimilable à un circuit résonnant parallèle RLC.

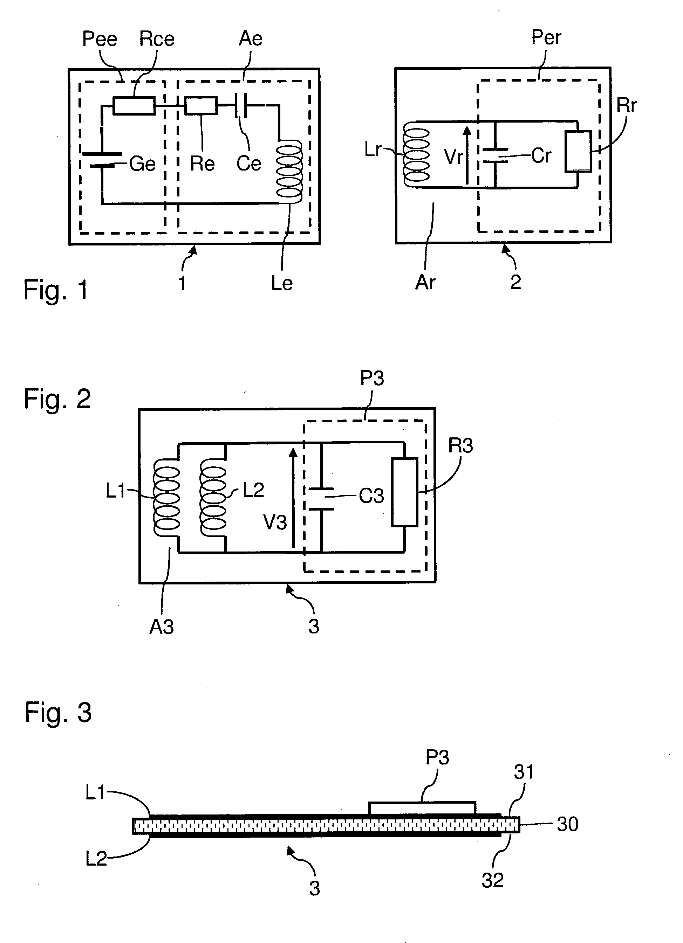

La figure 1 fournit un exemple schématique de la représentation électrique conventionnelle d'un lecteur 1 (dont l'antenne est assimilée à un circuit RLC série) et d'un récepteur RFID 2 de type inductif.

Côté lecteur, le circuit d'antenne Ae est représenté par une inductance équivalente Le, en série avec une résistance Re et une capacité Ce. Le circuit d'antenne Ae est connecté à un circuit électronique Pee du lecteur. L'impédance de sortie du lecteur est modélisée par une résistance Rce, connectée en série avec le circuit d'antenne Ae et une alimentation Ge. Une modélisation RLC parallèle côté lecteur est aussi possible.

Côté récepteur, le circuit d'antenne Ar est représenté par une inductance équivalente Lr. Le circuit d'antenne Ar est connecté à un circuit électronique Per. Le circuit électronique contient une capacité Cr. Une résistance Rr modélise la consommation électrique de ce circuit électronique et est connectée en parallèle à l'inductance équivalente Lr. Cette modélisation parallèle correspond à la très grande majorité des récepteurs. Cette architecture est majoritairement retenue pour des raisons de courant et tension mises en jeu et/ou des raisons de simplicité.

Le couplage inductif induit le transfert d'énergie entre le lecteur et le récepteur par inductance mutuelle. Lorsque le récepteur est placé suffisamment proche du lecteur, l'antenne du lecteur est couplée à l'antenne du récepteur. Une tension alternative ou force électromotrice est ainsi induite dans le récepteur. Cette tension est redressée et généralement utilisée pour alimenter les fonctions du récepteur.

Pour permettre la transmission de données du récepteur vers le lecteur, le récepteur modifie l'impédance qu'il présente aux bornes du circuit d'antenne. Cette variation d'impédance est détectée par le lecteur du fait du couplage inductif. Des préconisations de conception de systèmes RFID de type inductif sont notamment définies dans les normes ISO 15693, ISO 18000-3 et ISO 14443. Ces normes fixent notamment la fréquence de transmission à une fréquence de 13,56 MHz. La norme ISO 18000-2 fixe la fréquence de transmission à un niveau inférieur à 135KHz. En pratique, la distance de communication entre le lecteur et le récepteur est relativement réduite, typiquement comprise entre une dizaine de cm et un mètre pour ces fréquences.

Un circuit d'antenne usuel comprend une piste conductrice à une ou plusieurs boucles, fixée sur un support. Cette piste est généralement formée au plus proche de la périphérie du support, pour optimiser ou maximiser le flux électromagnétique qui la traverse. Le nombre de boucles de la piste est généralement fixé pour répondre aux deux contraintes suivantes : permettre la récupération d'une quantité d'énergie suffisante et permettre d'obtenir une bande passante suffisante pour la communication de données. En pratique, plus le nombre de boucles est élevé, et plus la bande passante pour la communication de données est importante. Plus le nombre de boucles est réduit, plus la transmission de puissance est importante. Par conséquent, la conception du circuit d'antenne nécessite un compromis, le récepteur n'étant alors pas optimisé pour sa récupération d'énergie.

Le document US2010/0283698 décrit notamment un circuit d'antenne comprenant deux boucles conductrices connectées électriquement en parallèle et disposées dans des surfaces parallèles. Ces boucles conductrices présentant des géométries identiques superposées, leur inductance mutuelle est maximisée.

Le document EP0541323 décrit un transpondeur sous forme de carte sans contact. Un des circuits d'antenne décrits comporte deux boucles conductrices connectées électriquement en parallèle et enroulées de façon concentrique. Les boucles conductrices sont réparties dans deux surfaces parallèles, en vue d'homogénéiser les longueurs des deux boucles.

Les systèmes RFID de type inductif sont sensibles au problème de l'effet de charge entre le lecteur et le récepteur. En effet, le résonateur formé par le lecteur se couple avec celui du récepteur. Ce couplage conduit à une désadaptation plus ou moins importante côté émission. La présence du récepteur génère en pratique une impédance sur le circuit résonant du lecteur. Cette impédance est une inductance mutuelle

$$M = k\sqrt{L_e * L_r}$$

où k est le coefficient de couplage entre les 2 antennes et Le, Lr les inductances des circuits d'antenne respectifs du lecteur et du récepteur. Cette inductance mutuelle introduit un décalage dans la fréquence de résonance du lecteur. Cet effet est d'autant plus important que les facteurs de qualité des résonateurs utilisés sont importants.

En pratique, une position dite de couplage critique correspond à la distance à laquelle le transfert d'énergie entre le lecteur et le récepteur est optimisé, du fait d'une adaptation d'impédance entre l'impédance de sortie du lecteur et l'impédance du récepteur ramenée sur l'antenne du lecteur par couplage.

Cependant, la distance de couplage critique reste extrêmement réduite par rapport aux exigences d'un grand nombre d'applications. Dans d'autres applications, telles que l'alimentation d'implants sous-cutanés, il serait souhaitable de pouvoir réaliser la téléalimentation au moyen d'un champ d'amplitude réduite.

L'invention vise à résoudre un ou plusieurs de ces inconvénients. L'invention porte ainsi sur un récepteur muni d'une antenne résonante à couplage inductif, comprenant :

- un circuit d'antenne inductif ;
- un circuit alimenté par le circuit d'antenne inductif et modélisable par une capacité et une résistance connectés en parallèle du circuit d'antenne.

Le circuit d'antenne inductif comprend au moins deux boucles conductrices connectées électriquement en parallèle, disposées dans des surfaces parallèles et présentant une inductance mutuelle sensiblement nulle.

Selon une variante, les deux boucles conductrices présentent des valeurs d'inductance sensiblement égales.

Selon encore une variante, les deux boucles conductrices sont disposées sur des surfaces parallèles d'un même support sur lequel elles sont fixées.

Selon une autre variante, le support est un substrat sur lequel est fixé un circuit électronique alimenté par le circuit d'antenne inductif.

Selon encore une autre variante, le circuit électronique comprend une charge électrique à alimenter et un circuit redresseur connecté aux bornes du circuit d'antenne inductif et appliquant une tension redressée aux bornes de ladite charge électrique.

Selon une variante, lesdites surfaces parallèles sont planes.

Selon encore une variante, la fréquence de résonance de l'ensemble incluant le circuit d'antenne inductif, la capacité et la résistance est sensiblement égale à 13,56MHz.

Selon une autre variante, les deux boucles conductrices présentent une même direction de sensibilité maximale à un champ magnétique.

Selon encore une autre variante, la distance entre lesdites surfaces parallèles est inférieure à 1 millimètre.

Selon une variante, lesdites deux boucles conductrices sont des premières boucles disposées dans des premières surfaces parallèles, le circuit d'antenne inductif comprenant au moins deux deuxièmes boucles conductrices connectées électriquement en parallèle, présentant une inductance mutuelle sensiblement nulle et disposées dans des deuxièmes surfaces parallèles, les deuxièmes surfaces parallèles étant non parallèles aux premières surfaces.

Selon encore une variante, le circuit inductif d'antenne présente un facteur de qualité supérieur à 30.

Selon une autre variante, la section de chacune desdites deux boucles est inférieure à 0.16m$^2$

Selon encore une autre variante, lesdites deux boucles sont superposées et s'étendent selon des motifs entrelacés.

Selon une variante, lesdites boucles sont formées de circuits conducteurs respectifs de formes similaires, lesdits circuits conducteurs étant décalés l'un par rapport à l'autre dans lesdites surfaces parallèles.

Selon encore une variante, lesdites deux boucles conductrices sont connectées en parallèle par l'intermédiaire de première et deuxième bornes, de sorte que les deux boucles conductrices induisent une même force électromotrice entre les première et deuxième bornes.

D'autres caractéristiques et avantages de l'invention ressortiront clairement de la description qui en est faite ci-après, à titre indicatif et nullement limitatif, en référence aux dessins annexés, dans lesquels :

- la figure 1 est une représentation électrique équivalente d'un système incluant un lecteur et un récepteur RFID de type inductif ;
- la figure 2 est une représentation électrique équivalente d'un exemple de récepteur de type inductif selon l'invention ;
- la figure 3 est une vue en coupe d'un récepteur selon un premier mode de réalisation de l'invention;
- les figures 4 et 5 sont des vues de dessus de boucles du circuit d'antenne du récepteur de la figure 3;
- la figure 6 est une vue de dessus du récepteur de la figure 3;
- la figure 7 est une vue en coupe d'un récepteur selon un deuxième mode de réalisation de l'invention ;
- les figures 8 et 9 sont des vues de dessus de boucles du circuit d'antenne du récepteur de la figure 7 ;
- la figure 10 est une vue de dessus du récepteur de la figure 7 ;
- la figure 11 est une représentation schématique en vue de dessus d'une superposition de boucles du circuit d'antenne selon un autre mode de réalisation de l'invention ;

- la figure 12 est une représentation électrique schématique d'un exemple de structure de récepteur selon l'invention.

L'invention propose un récepteur alimenté par son interface sans fil de type inductif. L'invention propose une configuration du circuit d'antenne inductif du récepteur permettant d'accroître la distance de téléalimentation ou permettant de limiter l'amplitude du champ émis pour une distance de téléalimentation donnée. La section qui suit va présenter une approche théorique établie par les inventeurs pour déterminer des paramètres optimaux de dimensionnement du circuit d'antenne d'un récepteur.

Si l'on se réfère à l'exemple de la figure 1, l'inductance Lr est réalisée sous forme de boucles conductrices concentriques et connectées en série, entourant un support du récepteur. Avec ω la pulsation de la porteuse du signal transmis par le lecteur, on a :

$$Vr = \frac{Rr}{Rr * (1 - Lr * Cr * \omega^2) + j * Lr * \omega} e$$

La force électromotrice e peut être exprimée comme suit :

$$e = -j * \omega_0 * S * \mu_0 * H$$

Avec S la section entourée par l'ensemble des boucles conductrices de l'inductance Lr et H l'amplitude du champ magnétique généré par le signal du lecteur au niveau du circuit d'antenne.

En partant de l'hypothèse que le facteur de qualité du circuit d'antenne est très supérieur au facteur de qualité du circuit Per, le facteur de qualité Q du récepteur est :

$$Q = \frac{Rr}{Lr * \omega_0}$$

A la fréquence de résonance, ω=ω0 et Lr*Cr*ω0² =1

On a alors : Ve=-j*Qe=-Q*S*w0*μ0*H

La puissance disponible au niveau du circuit d'antenne s'écrit :

$$P_R = \frac{Vr^2}{Rr} = \frac{Vr^2}{Q * Lr * \omega_0}$$

D'où :

$$P_r = Vr * \frac{\mu_0 * S}{Lr} H$$

Le 2ème terme de l'équation représente en fait le courant dans l'antenne IR :

$$I_r = \frac{\mu_0 * S}{Lr} H$$

Le rapport S/Lr est donc prépondérant pour obtenir une puissance Pr maximale récupérée, à champ magnétique H constant. Si n est le nombre de boucles, S est proportionnel à n et Lr à n². La puissance disponible Pr est donc inversement proportionnelle au nombre de boucles. C'est avec une unique boucle que l'on peut récupérer le maximum de puissance Pr.

L'invention propose une structure de circuit d'antenne optimisant ce rapport S/Lr.

La figure 2 est une représentation électrique schématique équivalente d'un exemple de récepteur 3 muni d'une antenne résonnante à couplage inductif. Comme dans l'exemple de la figure 1, le récepteur 3 comporte un circuit d'antenne inductif A3, et un circuit modélisé par une capacité C3 et un circuit résistif R3 connectés en parallèle du circuit d'antenne inductif A3. Le circuit d'antenne inductif A3, la capacité C3, et le circuit résistif R3 forment un circuit résonant dont la fréquence de résonance est proche de la porteuse du signal transmis par le lecteur. Cette fréquence de résonance pourra par exemple être égale à 13,56 MHz pour se conformer aux normes ISO 15693, ISO 18000-3 ou ISO 14443.

Le circuit d'antenne inductif A3 comprend des boucles conductrices L1 et L2. Ces boucles conductrices sont connectées électriquement en parallèle. Les boucles conductrices L1 et L2 sont disposées dans des surfaces parallèles et présentent une inductance mutuelle sensiblement nulle. On considèrera que des boucles conductrices présentant un coefficient de couplage inférieur à 5% ont une inductance mutuelle sensiblement nulle. Ce coefficient de couplage sera avantageusement inférieur à 1 %.

Des surfaces parallèles désignent mathématiquement des surfaces également distantes en tout point l'une de l'autre. Les surfaces portant les boucles d'antenne peuvent ainsi être des surfaces tridimensionnelles, telles que des portions cylindriques ou des portions sphériques par exemple. Dans un souci de simplification, les modes de réalisation présentés par la suite comportent des surfaces planes dans lesquelles les boucles conductrices sont disposées. Du fait de la disposition des boucles conductrices L1 et L2 dans des plans parallèles, ces boucles présentent une même direction de sensibilité maximale à un champ magnétique.

Pour des boucles L1 et L2 ayant une même valeur d'inductance L, l'inductance équivalente au circuit d'antenne A3 vaut L/2 dans le cas dune mutuelle inductance nulle entre ces boucles L1 et L2. Par ailleurs, le circuit d'antenne A3 comporte deux surfaces entourées par les boucles L1 et L2 et sensibles au champ magnétique du lecteur.

La solution de l'invention permet ainsi d'obtenir un rapport S/L accroissant la distance à laquelle une téléalimentation peut être obtenue ou réduisant le champ nécessaire pour réaliser une téléalimentation pour une distance donnée, et ce même avec une taille d'antenne réduite. Une récupération d'énergie optimale à une distance accrue peut ainsi être obtenue.

L'invention s'applique avantageusement à des circuits dans lesquels le facteur de qualité du circuit d'antenne est supérieur à 30, ou dans lequel le facteur de qualité du circuit d'antenne est au moins 5 fois supérieur au facteur de qualité du circuit Per connecté à l'antenne, préférentiellement au moins 10 fois supérieur. Un circuit d'antenne présentant un facteur de qualité élevé pourra induire une hausse de la plage de distance pour laquelle une téléalimentation du récepteur pourra être réalisée. Le circuit d'antenne pourra être considéré comme la partie de circuit inductive connectée en parallèle à la charge à alimenter et à la capacité du circuit résonant.

Pour favoriser une valeur d'inductance réduite du circuit d'antenne inductif A3, les boucles conductrices L1 et L2 présentent avantageusement des valeurs d'inductance égales, et avantageusement des sections identiques. La différence entre les valeurs d'inductance des boucles conductrices L1 et L2 est par exemple limitée à 10%, voire limitée à 5%.

Dans l'exemple, les boucles conductrices L1 et L2 sont disposées sur des faces parallèles d'un même support sur lequel les boucles L1 et L2 sont fixées. Le support peut être un substrat sur lequel est fixé un circuit électronique P3, ou une puce électronique ou de l'électronique en composants discrets, présentant une résistance modélisée par R3 et une capacité modélisée par C3. Le circuit électronique P3 peut inclure une charge électrique à alimenter (par exemple un ensemble de composants électroniques) ainsi qu'un circuit redresseur permettant de redresser la tension alternative récupérée par le circuit d'antenne A3 et appliquer une tension redressée aux bornes de la charge électrique.

La figure 3 est une vue en coupe schématique d'un premier mode de réalisation d'un récepteur 3 selon l'invention. Le récepteur 3 comporte un support 30, par exemple au format d'une carte de crédit. La boucle L1 est fixée sur une face supérieure 31 du support 30, et la boucle L2 est fixée sur une face inférieure 32 du support 30. Les boucles L1 et L2 sont connectées électriquement en parallèle par l'intermédiaire d'une connectique appropriée, et connectées au circuit électronique P3.

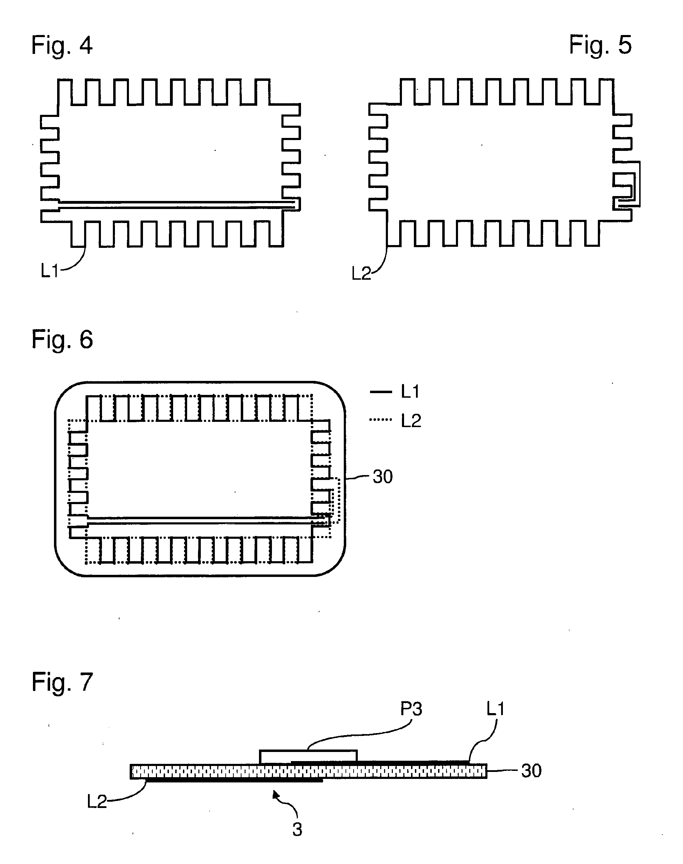

Les figures 4 et 5 sont des vues de dessus des motifs respectifs des boucles L1 et L2. La figure 6 illustre en vue de dessus la superposition des boucles L1 et L2 sur le support 30. Les motifs des boucles L1 et L2 incluent ainsi des créneaux superposés et entrelacés. Une telle configuration permet d'optimiser la surface de captage du champ magnétique de chaque boucle pour un support 30 de dimensions données.

Dans cet exemple, l'inductance mutuelle nulle entre les boucles L1 et L2 est obtenue en plaçant en vis-à-vis des portions parcourues par des courants de même direction et des portions parcourues par des courants de directions opposées, de façon connue en soi de l'homme du métier.

Afin de limiter les dimensions des créneaux, et ainsi de limiter l'inductance de chacune des boucles L1 et L2 ainsi que la surface qu'elles occupent , le support 30 utilisé est avantageusement relativement fin, et présente par exemple une épaisseur inférieure à 1 mm, de préférence inférieure à 600 $\mu$m, plus préférentiellement inférieure à 400$\mu$m, voire inférieure à 200$\mu$m ou même inférieure à 100$\mu$m. De faibles épaisseurs favorisent un couplage accru des portions en créneaux en vis-à-vis, et permettent donc de réduire les dimensions des créneaux.

La figure 7 est une vue en coupe schématique d'un deuxième mode de réalisation d'un récepteur 3 selon l'invention. Le récepteur 3 comporte un support 30, par exemple au format d'une carte de crédit. La boucle L1 est fixée sur une face supérieure 31 du support 30, et la boucle L2 est fixée sur une face inférieure 32 du support 30. Les boucles L1 et L2 sont connectées électriquement en parallèle par l'intermédiaire d'une connectique appropriée (incluant les plots respectifs PL11, PL12 et PL21, PL22), et connectées au circuit électronique P3.

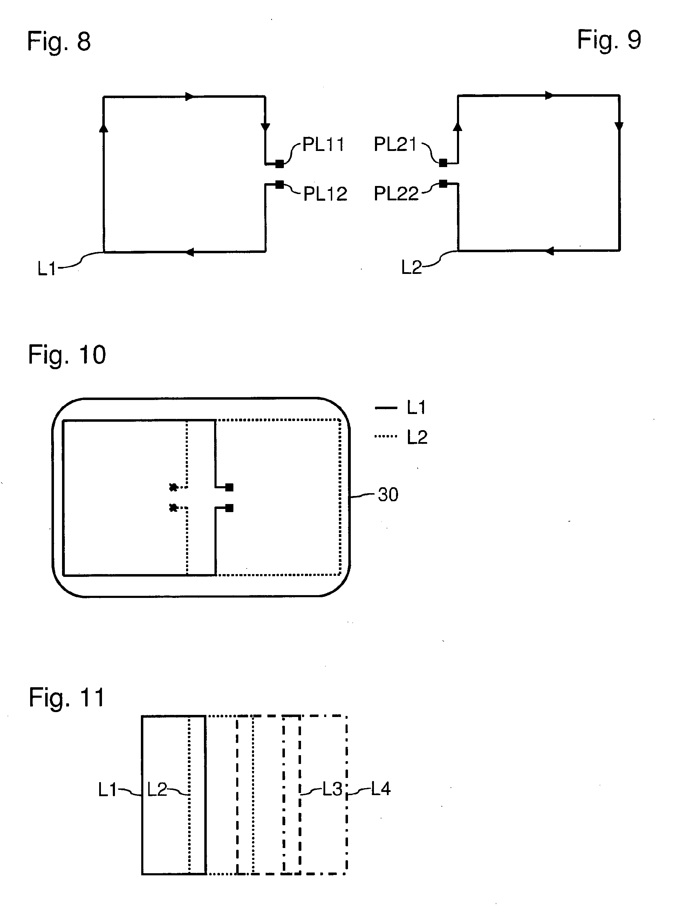

Les figures 8 et 9 sont des vues de dessus des motifs respectifs des boucles L1 et L2. Les figures 8 et 9 illustrent également les directions de courants parcourant en simultané les boucles L1 et L2. Les boucles L1 et L2 sont connectées de sorte que leurs forces électromotrices soient dans le même sens. A cet effet, le plot PL11 est connecté au plot PL22 pour former une même borne d'alimentation de la puce P3. Le plot PL12 est connecté au plot PL21 pour former une autre borne d'alimentation du circuit électronique P3. La figure 10 illustre en vue de dessus la superposition des boucles L1 et L2 sur le support 30. Comme illustré, la réunion des projections des boucles L1 et L2 dans un même plan est proche de la périphérie du support 30, ce qui optimise l'utilisation des faces du support.

Les boucles L1 et L2 présentent sensiblement la même forme géométrique (carrée en l'occurrence) et sont décalées l'une par rapport à l'autre dans les surfaces 31 et 32, comme cela ressort plus précisément de la figure 10.

Dans ce mode de réalisation, chaque boucle présente une section notablement inférieure à celle de la face sur laquelle elle est disposée. Cependant, la longueur de conducteur de chaque boucle est relativement réduite, ce qui permet d'obtenir une valeur d'inductance relativement faible. Par conséquent, on obtient un rapport S/L favorisant une récupération de puissance optimale par le récepteur. En effet, chaque boucle L1 ou L2 présente un rapport S/L proche d'une boucle unique selon l'état de la technique (S et L dune boucle selon l'invention étant approximativement la moitié de celles dune boucle selon l'état de la technique). Le rapport S/L des boucles L1 et L2 en parallèle étant la somme du rapport S/L de chaque boucle L1 et L2, ce rapport est nettement supérieur à celui d'une boucle unique selon l'état de la technique.

Un calcul théorique peut être effectué dans l'exemple suivant :

- une unique boucle selon l'état de la technique, dune surface de 42 cm$^2$ pourrait présenter une inductance de 260nH. Le rapport S/L s'élève alors à 162cm$^2$/$\mu$H ;
- une boucle L1 ou L2 d'une surface de 22,5 cm$^2$ présenterait une inductance de 170nH. Le rapport S/L de cette boucle s'élève alors à 132cm$^2$/$\mu$H. Les boucles L1 et L2 en parallèle présentent un rapport S/L de 264cm$^2$/$\mu$H.

Ainsi, le gain théorique de rapport S/L dans cet exemple est de 60% en utilisant de telles boucles L1 et L2.

Des simulations et mesures ayant comparé une unique boucle suivant la périphérie du support 30 au deuxième mode de réalisation ont permis de déterminer un gain de 40% de récupération d'énergie avec les paramètres ci-dessus.

L'invention s'avère particulièrement appropriée pour des récepteurs de dimensions réduites, présentant par exemple des boucles dont la section est inférieure à 0,16 m$^2$, voire inférieure à 54cm$^2$. On désigne par section d'une boucle la surface entourée par cette boucle.

Bien que l'invention ait été décrite dans un souci de simplification avec des modes de réalisation comportant seulement deux boucles connectées en parallèle, l'invention s'applique bien entendu à des récepteurs comportant un plus grand nombre de boucles dans des surfaces parallèles et présentant une inductance mutuelle sensiblement nulle. Un tel exemple est schématiquement illustré à la figure 11, dans lequel des boucles L1 à L4 connectées en parallèle sont superposées. Une telle modification permettrait d'obtenir un recouvrement accru entre les boucles, tout en bénéficiant d'une valeur d'inductance réduite. Les boucles L1 à L4 peuvent être incluses à l'intérieur d'un substrat multicouches.

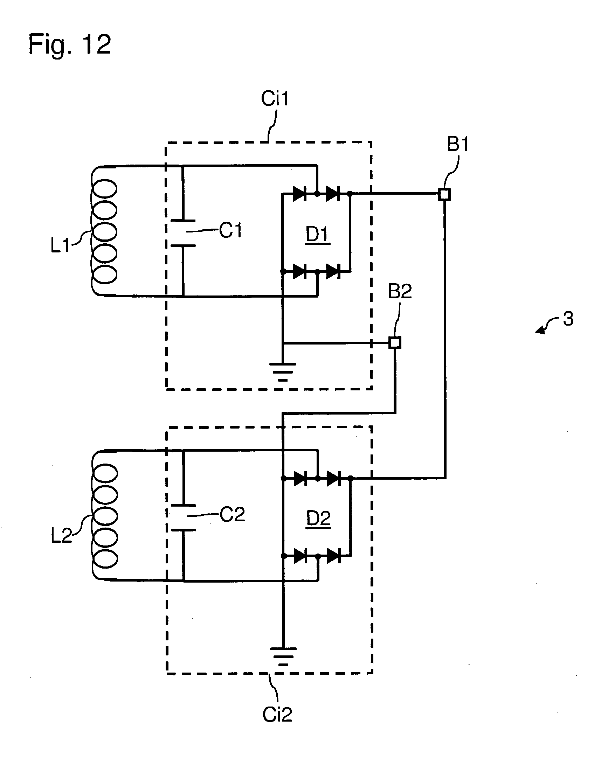

La figure 12 est une représentation électrique schématique d'un exemple de structure de récepteur selon l'invention. Dans cet exemple, les boucles L1 et L2 sont connectées respectivement à des circuits intégrés Ci1 et Ci2 (les boucles L1 et L2 peuvent bien entendu également être connectées à des composants discrets). Les circuits intégrés Ci1 et Ci2 comprennent respectivement des capacités C1 et C2 et des redresseurs D1 et D2. Les circuits redresseurs D1 et D2 sont connectés à des bornes communes B1 et B2. Les bornes B1 et B2 sont destinées à la connexion d'une charge (la charge incluant par exemple toutes les fonctions électroniques du récepteur) devant être alimentée par le signal redressé.

Ainsi, la mise en parallèle des boucles L1 et L2 peut aussi être réalisée après un étage d'électronique tel que le circuit redresseur, le gain apporté par l'invention restant le même.

Bien que le récepteur décrit comporte des premières boucles dans des premières surfaces parallèles, on peut également prévoir un récepteur présentant une sensibilité accrue selon d'autres axes, en incluant des deuxièmes boucles dans des deuxièmes surfaces non parallèles aux premières surfaces. Les deuxièmes boucles présenteront alors des propriétés similaires aux premières, à savoir une connexion électrique en parallèle et une inductance mutuelle sensiblement nulle.

**Revendications**

1. Récepteur (3) muni d'une antenne résonante à couplage inductif, comprenant :

    - un circuit d'antenne inductif (A3) ;
    - un circuit alimenté par le circuit d'antenne inductif et modélisable par une capacité (C3) et une résistance (R3) connectés en parallèle du circuit d'antenne ;
    **caractérisé en ce que** :

        le circuit d'antenne inductif comprend au moins deux boucles conductrices (L1, L2) connectées électriquement en parallèle, disposées dans des surfaces parallèles et présentant une inductance mutuelle sensiblement nulle.

2. Récepteur selon la revendication 1, dans lequel les deux boucles conductrices (L1, L2) présentent des valeurs d'inductance sensiblement égales.

3. Récepteur selon la revendication 1 ou 2, dans lequel les deux boucles conductrices (L1, L2) sont disposées sur des surfaces parallèles (31, 32) d'un même support (30) sur lequel elles sont fixées.

4. Récepteur selon la revendication 3, dans lequel le support est un substrat sur lequel est fixé un circuit électronique (P3) alimenté par le circuit dantenne inductif.

5. Récepteur selon la revendication 4, dans lequel le circuit électronique (Ci1) comprend une charge électrique à alimenter et un circuit redresseur (D1) connecté aux bornes du circuit dantenne inductif et appliquant une tension redressée aux bornes de ladite charge électrique.

6. Récepteur selon une quelconque revendication précédente, dans lequel lesdites surfaces parallèles (31,32) sont planes.

7. Récepteur selon l'une quelconque des revendications précédentes, dans lequel la fréquence de résonance de l'ensemble incluant le circuit d'antenne inductif, la capacité et la résistance est sensiblement égale à 13,56MHz.

8. Récepteur selon l'une quelconque des revendications précédentes, dans lequel les deux boucles conductrices (L1, L2) présentent une même direction de sensibilité maximale à un champ magnétique.

9. Récepteur selon l'une quelconque des revendications précédentes, dans lequel la distance entre lesdites surfaces parallèles (31,32) est inférieure à 1 millimètre.

10. Récepteur selon l'une quelconque des revendications précédentes, dans lequel lesdites deux boucles conductrices sont des premières boucles disposées dans des premières surfaces parallèles, le circuit d'antenne inductif comprenant au moins deux deuxièmes boucles conductrices connectées électriquement en parallèle, présentant une inductance mutuelle sensiblement nulle et disposées dans des deuxièmes surfaces parallèles, les deuxièmes surfaces parallèles étant non parallèles aux premières surfaces.

11. Récepteur selon l'une quelconque des revendications précédentes, dans lequel le circuit inductif d'antenne (A3) présente un facteur de qualité supérieur à 30.

12. Récepteur selon l'une quelconque des revendications précédentes, dans lequel la section de chacune desdites deux boucles est inférieure à 0.16m$^2$

13. Récepteur selon l'une quelconque des revendications précédentes, dans lequel lesdites deux boucles (L1, L2) sont superposées et s'étendent selon des motifs entrelacés.

14. Récepteur selon l'une quelconque des revendications 1 à 12, dans lequel lesdites boucles sont formées de circuits conducteurs respectifs de formes similaires, lesdits circuits conducteurs étant décalés l'un par rapport à l'autre dans lesdites surfaces parallèles.

15. Récepteur selon l'une quelconque des revendications précédentes, dans lequel lesdites deux boucles conductrices sont connectées en parallèle par l'intermédiaire de première et deuxième bornes, de sorte que les deux boucles conductrices induisent une même force électromotrice entre les première et deuxième bornes.

**Patentansprüche**

1. Empfänger (3), der mit Resonanzantenne mit induktiver Kopplung versehen ist, umfassend:

- einen induktiven Antennenkreis (A3);
- einen Kreis, der von dem induktiven Antennenkreis gespeist wird und durch eine Kapazität (C3) und einen Widerstand (R3) des Antennenkreises, die parallel geschaltet sind, modellierbar ist;
**dadurch gekennzeichnet, dass**
der induktive Antennenkreis mindestens zwei leitende Schleifen (L1, L2) umfasst, die elektrisch parallel geschaltet und in parallelen Flächen angeordnet sind und eine wechselseitige oder gegenseitige Induktanz im Wesentlichen gleich Null aufweisen.

2. Empfänger nach Anspruch 1, bei dem die beiden leitenden Schleifen (L1, L2) im Wesentlichen gleiche Induktanzwerte aufweisen.

3. Empfänger nach Anspruch 1 oder 2, bei dem die beiden leitenden Schleifen (L1, L2) auf parallelen Flächen (31, 32) eines selben Trägers (30), auf dem sie befestigt sind, angeordnet sind.

4. Empfänger nach Anspruch 3, bei dem der Träger ein Substrat ist, auf dem eine elektronische Schaltung (P3), die von dem induktiven Antennenkreis versorgt wird, befestigt ist.

5. Empfänger nach Anspruch 4, bei dem die elektronische Schaltung (Ci1) eine einzuspeisende elektrische Ladung und eine Gleichrichterschaltung (D1) umfasst, die an die Klemmen des induktiven Antennenkreises angeschlossen ist und eine gleichgerichtete Spannung an den Klemmen der elektrischen Ladung anlegt.

6. Empfänger nach einem der vorhergehenden Ansprüche, bei der die parallelen Flächen (31, 32) eben sind.

7. Empfänger nach einem der vorhergehenden Ansprüche, bei dem die Resonanzfrequenz der Einheit, umfassend den induktiven Antennenkreis, die Kapazität und den Widerstand, im Wesentlichen gleich 13,56 MHz ist.

**8.** Empfänger nach einem der vorhergehenden Ansprüche, bei dem die beiden leitenden Schleifen (L1, L2) eine selbe Richtung mit maximaler Empfindlichkeit für ein Magnetfeld aufweisen.

**9.** Empfänger nach einem der vorhergehenden Ansprüche, bei dem der Abstand zwischen den parallelen Flächen (31, 32) kleiner als 1 Millimeter ist.

**10.** Empfänger nach einem der vorhergehenden Ansprüche, bei dem die beiden leitenden Schleifen erste Schleifen sind, die in ersten parallelen Flächen angeordnet sind, wobei der induktive Antennenkreis mindestens zwei zweite leitende Schleifen, die elektrisch parallel geschaltet sind, umfasst, die eine wechselseitige Induktanz im Wesentlichen gleich Null aufweisen und in zweiten parallelen Flächen angeordnet sind, wobei die zweiten parallelen Flächen zu den ersten Flächen nicht parallel sind.

**11.** Empfänger nach einem der vorhergehenden Ansprüche, bei dem der induktive Antennenkreis (A3) einen Qualitätsfaktor über 30 aufweist.

**12.** Empfänger nach einem der vorhergehenden Ansprüche, bei dem der Querschnitt jeder der beiden Schleifen kleiner als 0.16m$^2$ ist.

**13.** Empfänger nach einem der vorhergehenden Ansprüche, bei dem die beiden Schleifen (L1,L2) übereinander angeordnet sind und sich entlang von verschlungenen Motiven erstrecken.

**14.** Empfänger nach einem der Ansprüche 1 bis 12, bei dem die Schleifen von jeweiligen leitenden Kreisen mit ähnlichen Formen gebildet sind, wobei die leitenden Kreise zueinander in den parallelen Flächen versetzt sind.

**15.** Empfänger nach einem der vorhergehenden Ansprüche, bei dem die beiden leitenden Schleifen durch erste und zweite Klemmen parallel geschaltet sind, so dass die leitenden Schleifen eine selbe elektromotorische Kraft zwischen der ersten und der zweiten Klemme induzieren.

**Claims**

**1.** A receiver (3) equipped with a resonant antenna with inductive coupling, comprising:

- an inductive antenna circuit (A3);
- a circuit powered by the inductive antenna circuit, being modeled by a capacitor (C3) and a resistor (R3) that are connected in parallel with the antenna circuit;
**characterized in that**:

the inductive antenna circuit comprises at least two conducting loops (L1, L2) connected electrically in parallel, disposed on parallel surfaces and presenting substantially zero mutual inductance.

**2.** The receiver according to claim 1, in which the two conducting loops (L1, L2) present substantially equal values of inductance.

**3.** The receiver according to claim 1 or 2, in which the two conducting loops (L1, L2) are disposed on parallel surfaces (31, 32) of the same support (30) on which they are fixed.

**4.** The receiver according to claim 3, in which the support is a substrate on which an electronic circuit (P3) powered by the inductive antenna circuit is fixed.

**5.** The receiver according to claim 4, in which the electronic circuit (Ci1) comprises an electrical load to be powered, and a rectifier circuit (D1) connected to terminals of the inductive antenna circuit and applying a rectified voltage to terminals of said electrical load.

**6.** The receiver according to any one of the previous claims, in which said parallel surfaces (31, 32) are planar.

**7.** The receiver according to any one of the previous claims, in which the resonance frequency of the assembly including the inductive antenna circuit, the capacitor, and the resistor is substantially equal to 13.56 megahertz.

**8.** The receiver according to any one of the previous claims, in which the two conducting loops (L1, L2) present the same direction of maximum sensitivity to a magnetic field.

**9.** The receiver according to any one of the previous claims, in which a distance between said parallel surfaces (31, 32) is less than 1 millimeter.

**10.** The receiver according to any one of the previous claims, in which said two conducting loops are first loops disposed on first parallel surfaces, the inductive antenna circuit comprising at least two second conducting loops connected electrically in parallel, presenting substantially zero mutual inductance and disposed in second parallel surfaces, the second parallel surfaces being non-parallel to the first surfaces.

**11.** The receiver according to any one of the previous claims, in which the inductive antenna circuit (A3) presents a quality factor of greater than 30.

**12.** The receiver according to any one of the previous claims, in which the cross-section of each of said two loops is less than 0.16 m$^2$.

**13.** The receiver according to any one of the previous claims, in which said two loops (L1, L2) are superimposed and extend according to interlaced patterns.

**14.** The receiver according to any one of claims 1 to 12, in which said loops are formed of respective conducting circuits of similar shapes, said conducting circuits being shifted with respect to one another along said parallel surfaces.

**15.** The receiver according to any one of the previous claims, in which said two conducting loops are connected in parallel by way of first and second terminals, such that the two conducting loops induce a same electromotive force between the first and second terminals.

Pee  Rce     Ae

Ge    Re   Ce   Le

**Fig. 1**    1

Per

Lr   Vr   Cr   Rr

Ar    2

**Fig. 2**

P3

L1  L2   V3   C3   R3

A3    3

**Fig. 3**

P3    31

L1
L2    30

3    32

Fig. 4

Fig. 5

L1

L2

Fig. 6

— L1
···· L2

30

Fig. 7

P3

L1

30

L2

3

Fig. 8

Fig. 9

PL11

PL12

PL21

PL22

L1

L2

Fig. 10

— L1
······ L2

30

Fig. 11

L1  L2          L3  L4

Fig. 12

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- US 20100283698 A

- EP 0541323 A